(19) Europäisches Patentamt
European Patent Office
Office européen des brevets

(11) Publication number: **0 506 113 A2**

(12) **EUROPEAN PATENT APPLICATION**

(21) Application number: **92105365.8**

(22) Date of filing: **27.03.92**

(51) Int. Cl.[5]: **C08L 83/04**, C08K 5/54, C09D 5/14, C09D 183/04

(30) Priority: **28.03.91 JP 91212/91**

(43) Date of publication of application: **30.09.92 Bulletin 92/40**

(84) Designated Contracting States: **BE DE FR GB IT**

(71) Applicant: **Dow Corning Toray Silicone Company, Limited**
**Mitsui Bldg. No. 6, 2-3-16,**
**Nihonbashi-Muromachi, Chuo-Ku**
**Tokyo 103(JP)**

(72) Inventor: **Ona, Isao**
**2848-46, Kubota, Sodegaura-machi**
**Kimitsu-gun, Chiba Prefecture(JP)**
Inventor: **Ozaki, Masaru**
**26-10, 3-chome, Sakuradai**
**Ichihara-shi,Chiba Prefecture(JP)**

(74) Representative: **Spott, Gottfried, Dr.**
**Spott Weinmiller & Partner**
**Sendlinger-Tor-Platz 11**
**W-8000 München 2(DE)**

(54) **Antimicrobial silicone composition.**

(57) There is disclosed a composition for treating solids to provide a durable, persistent water repellency and strong antimicrobial character thereto, said composition comprising (A) an organopolysiloxane resin; (B) a straight-chain diorganopolysiloxane; (C) a compound selected from the group consisting of an organotitanate ester, an organozirconate ester and an organogermanate ester; (D) a silane or its partial hydrolysis condensate; and (E) a solvent.

EP 0 506 113 A2

The present invention relates to a composition for application as a treatment agent for solid materials, hereinafter referred to as the "treatment composition". In more specific terms, the present invention relates to a treatment composition which will impart a strong and durable antimicrobial character as well as a strong and durable water repellency to solids such as textiles and fabrics for industrial and clothing applications, leather products, and various types of building materials.

A waterproofing treatment is almost always used on such solids as, for example, covering sheets for materials, tenting, sails, coats, jumpers, socks, diaper covers, boots, inorganic building materials, and organic building materials, due to their potential exposure to precipitation, moisture, or humidity.

However, mold and mildew grow rather readily on the raw materials which make up the above-listed products and building materials; this mold growth is substantially accelerated when these articles become dirty or contaminated. This causes such problems as color changes, the development of odors, or a loss in material strength. Furthermore, mold growth substantially impairs the appearance of building materials.

Older methods which were employed in order to solve these problems consisted of protection against mold by (a) treatment with an organotin compound, organomercury compound, halogenated phenol, organocopper compound, or cationic surfactant containing a quaternary organoammonium salt group, or (b) addition of the preceding to the waterproofing agent.

Quaternary ammonium salt-containing silane antimicrobials were then discovered. These rapidly entered into use in particular in the field of clothing applications because they are almost completely devoid of human toxicity and because the water repellency of solids can also be substantially improved by treatment with such silanes.

However, while water-repellent apparel (e. g., raincoats, umbrella fabric) requires a water repellency of 90 to 100 as measured by the spray method in "Methods for Testing the Water Repellency of Textile Products" (JIS L-1092), (Japanese Industrial Standard) the water repellency afforded by treatment with quaternary ammonium salt-containing silanes gives values of 50 to 70 at the most. The durability of the water repellency afforded by these compounds is also poor. As a consequence, they are unsatisfactory in use on water-repellent apparel.

The present invention takes as its object the introduction of a treatment composition which can impart a strong and durable antimicrobial character and a strong and durable water repellency to solids treated with it.

The aforesaid object is achieved by a composition for application as a treatment agent for solid materials, wherein said composition comprises:

(A) 100 parts by weight of an organopolysiloxane resin comprising $SiO_{4/2}$ units and $R_3SiO_{1/2}$ units, wherein R is a monovalent hydrocarbon group, which resin contains reactive groups selected from the group consisting of silanol, silicon-bonded alkoxy groups and a combination thereof;

(B) 1 to 200 parts by weight of a straight-chain diorganopolysiloxane;

(C) 1 to 200 parts by weight of a compound selected from the group consisting of an organotitanate ester, an organozirconate ester and an organogermanate ester;

(D) a compound selected from the group consisting of a silane and its partial hydrolysis condensate, said silane having the general formula

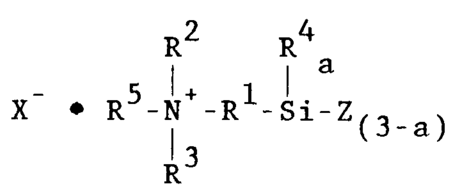

wherein X is a halogen atom, $R^1$ is an alkylene group having 2 to 10 carbon atoms, $R^2$, $R^3$, and $R^4$ are monovalent hydrocarbon groups, $R^5$ is a monovalent hydrocarbon group having 10 to 20 carbon atoms, Z is an alkoxy group and a is 0 or 1, from 0.5 to 100 parts by weight of said component (D) being used for each 100 parts by weight of the total quantity of said components (A) plus (B) plus (C); and (E) a solvent.

To explain the preceding in greater detail, an excellent but also durable water repellency is provided through the crosslinking of components (A) and (C) or components (A), (B), and (C) at room, or relatively low, temperature to form a film on the surface of the solid. Because component (D) is also present, a durable antimicrobial activity is simultaneously realized due to the participation of this component in the crosslinking reactions.

In addition to providing water repellency, the organopolysiloxane resin comprising component (A)

engenders and supports the durability of the various effects by providing adhesion with the particular solid. Component (A) consists of at least $SiO_{4/2}$ units and $R_3SiO_{1/2}$ units wherein R is a monovalent hydrocarbon group, as exemplified by methyl, ethyl, propyl, butyl, pentyl, hexyl, vinyl, phenyl, and their halogenated derivatives. Among these, the methyl group is most typically used. In a preferred embodiment, methyl comprises at least 70 mole% of the total R groups.

Component (A) may be prepared, for example, by the initial preparation of a low condensate by the hydrolysis of tetrachlorosilane or tetraethoxysilane and by subsequently blocking the silanol groups with trimethylmonochlorosilane. Alternatively, this component may be prepared by the co-hydrolysis and condensation of tetrachlorosilane and trimethylmonochlorosilane or tetraalkoxysilane and trimethylalkoxysilane. Sodium silicate may be used as starting material in place of tetraalkoxysilane. This organopolysiloxane resin must contain the silanol group, Si-bonded alkoxy group, or both in order to react with components (B) and (C). The total quantity of these functional groups in component (A) should fall within the range of 0.1 to 5 weight% and preferably 0.3 to 2 weight% in each case referred to the weight of the organopolysiloxane resin.

The organopolysiloxane resin comprising component (A) must contain both $SiO_{4/2}$ units and $R_3SiO_{1/2}$ units, but a small quantity of $R_2SiO$ units may also be present. In order to deploy the composition according to the present invention dissolved in solvent, component (A) must, in addition, be soluble in solvent. However, an excessively high degree of condensation risks insolubility. On the other hand, an excessively low degree of condensation is associated with a poorer durability because the corresponding film on the surface of the solid is weak. As a consequence, the average number of silicon atoms in each molecule of this organopolysiloxane resin should fall within the range of 3 to 100 and preferably within the range of 5 to 30.

The straight-chain diorganopolysiloxane comprising component (B) employed by the present invention functions to improve the film's water repellency while at the same time imparting flexibility. Flexibility is a particularly crucial attribute when the solid is an article of apparel. The silicon-bonded organic groups in this straight-chain diorganopolysiloxane are exemplified by alkyl groups such as methyl, ethyl, butyl, hexyl, and octyl; by alkenyl groups, such as vinyl, allyl, and hexenyl; by aryl groups, such as phenyl; and by substituted hydrocarbon groups such as 3,3,3-trifluoropropyl. The methyl group is preferred. Typical examples of this component are dimethylpolysiloxane, dimethylsiloxane-methylethylsiloxane copolymers, dimethylsiloxane-methylvinylsiloxane copolymers, and dimethylsiloxane-methylphenylsiloxane copolymers. Among these, dimethylpolysiloxane is most preferred.

The two molecular chain terminals of this straight- chain diorganopolysiloxane may consist of a triorganosiloxy group such as trimethylsiloxy or dimethylvinylsiloxy, but end-blocking by hydroxyl or alkoxy is also permissible. No specific restriction applies to the viscosity of this straight-chain diorganopolysiloxane, but the viscosity will typically fall within the range of 5 to 10,000 centistokes and preferably within the range of 10 to 1,000 centistokes at 25°C. Nor is the quantity of component (B) specifically restricted. However, based on the fact that the hardness and pliability of the film can be broadly adjusted through this component's quantity of addition, it is generally used within the range of 1 to 200 weight parts per 100 weight parts component (A).

The component (C) employed in the present invention is an organotitanate ester, organozirconate ester, or organogermanate ester. In addition to providing water repellency, this component functions as a curing catalyst either for component (A) by itself or for component (A) plus component (B) when hydroxyl or alkoxy is present at the molecular chain terminals of the latter. The curing reaction proceeds under the influence of atmospheric moisture. While the cure will develop even at room temperature, the curing reaction may optionally be carried out by heating to relatively low temperatures of 50 to 150°C.

Component (C) is exemplified by the following compounds and by their partial hydrolysis condensates:
tetraethyl titanate,
tetraisopropyl titanate,
tetra-n-butyl titanate,
tetra-2-ethylhexyl titanate,
tetraphenyl titanate,
tetraoctadecyl titanate,
tetrastearyl titanate,
diisopropylbisacetylacetone titanate,
tri-n-butoxymonostearyl titanate,
tetraoctylene glycol titanate,
dihydroxybislactic acid titanate,
$Ti(OC_2H_4NH_2)_4$,

$(C_3H_7O)Ti(OC_2H_4NH_2)_3$,
$(C_3H_7O)_2Ti(OC_2H_4NH_2)_2$,
$(C_4H_9O)_3Ti(OC_2H_4NH_2)$,
$Ti[OC_2H_4NH(C_2H_4OH)]_4$,
$(C_4H_9O)Ti[OC_2H_4NH(C_2H_4OH)]_3$,
$(C_4H_9O)_2Ti[OC_2H_4NH(C_2H_4OH)]_2$,
$(C_4H_9O)_3Ti[OC_2H_4NH(C_2H_4OH)]$,
$Ti[OC_2H_4N(C_2H_4OH)_2]_4$,
$(C_4H_9O)Ti[OC_2H_4N(C_2H_4OH)_2]_3$,
$(C_4H_9O)_2Ti[OC_2H_4N(C_2H_4OH)_2]_2$,
$(C_4H_9O)_3Ti[OC_2H_4N(C_2H_4OH)_2]$,
$(C_3H_7O)_2Ti[OC_2H_4N(C_3H_6OH)_2]_2$,

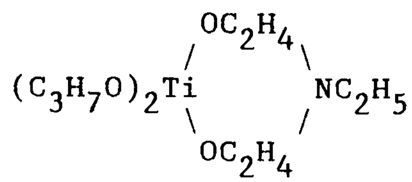

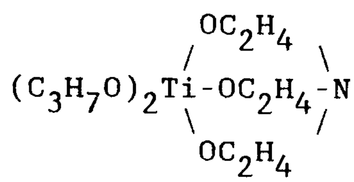

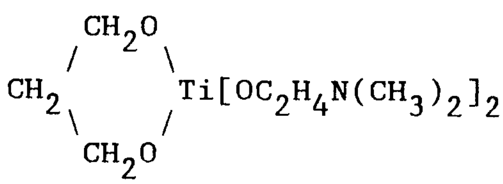

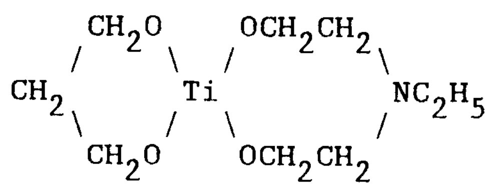

Additional examples include those compounds obtained by replacing the titanium in the preceding compounds with zirconium or germanium as well as the partial hydrolysis condensates of the zirconium and germanium compounds thus obtained. Component (C) may consist of only a single species or of one or more species selected from the preceding. While the quantity of addition of component (C) is not specifically restricted, this component is generally employed within the range of 1 to 200 weight parts per 100 weight parts component (A).

The component (D) used by the present invention is the essential component for imparting an antimicrobial character to the solid. This component is a quaternary ammonium salt group-containing silane having the following general formula

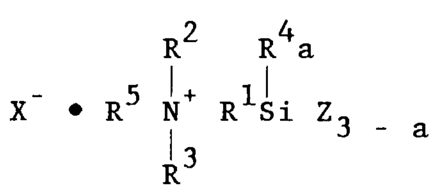

In this formula, X is a halogen atom such as chlorine, bromine, and iodine, chlorine being preferred. $R^1$ is an alkylene group having 2 to 10 carbons such as ethylene, propylene, butylene, and pentylene. $R^2$, $R^3$, and $R^4$ are each monovalent hydrocarbon groups, and are exemplified by alkyl groups such as methyl, ethyl,

and propyl; by substituted alkyl groups, such as 2-phenylethyl, 2-phenylpropyl, and 3,3,3-trifluoropropyl; and by aryl and substituted aryl groups, such as phenyl and tolyl. $R^5$ is a monovalent hydrocarbon group having 10 to 20 carbons, and it is exemplified by alkyl groups such as decyl, undecyl, dodecyl, tridecyl, octadecyl, and eicosyl; by alkenyl groups such as undecenyl, dodecenyl, and octadecenyl; and by aryl groups. The group Z is an alkoxy group, and examples in this regard are methoxy, ethoxy, propoxy, butoxy, and methoxyethoxy. The subscript a has a value of zero or one. In addition, because this component is hydrolyzable, its partial hydrolysis condensate may also be employed.

Component (D) has an antimicrobial activity, and it inhibits the propagation of molds such as black molds, Penicillium, Aspergillus, Rhizopus, and Trichophyton, as well as bacteria such as Escherichia coli, Staphylococcus aureus, Corynebacterium, gram-negative rods, Bacillus species, and rods and cocci.

Component (D) is added at 0.5 to 100 weight parts and preferably at 5 to 30 weight parts in each case per 100 weight parts of the total quantity of components (A) plus (B) plus (C). The antimicrobial activity will be weak at less than 0.5 weight parts while the excellent water repellency associated with components (A) through (C) is diminished when the addition exceeds 100 weight parts.

Component (E) is employed as solvent for components (A) through (D), and it is optimally an aromatic solvent, such as benzene, toluene, and xylene or a chlorinated solvent, such as carbon tetrachloride, 1,1,2,2-tetrachloroethylene, and 1,1,1-trichloroethane. These solvents may be admixed with solvents such as n-hexane, n-heptane, methyl ethyl ketone, isopropyl alcohol, ethyl alcohol, mineral terpene, and so forth. The quantity of solvent use is not specifically restricted, but optimally is 50 to 99.5 weight% based on the total quantity.

The add-on quantity of the composition under consideration (i.e., treatment level), is not specifically restricted because it will vary with the nature of the solid; however, add-ons of 0.1 to 5 weight% (referred to the solid) are typical. With regard to the treatment method, the composition may be applied to the solid by spraying, roll coating, brush application, immersion, addition, and so forth. Application is followed by holding at room temperature, but an additional heating at 50 to 150 °C is preferred post-application in order to improve the production efficiency and durability. This treatment will impart a durable antimicrobial character and a durable water repellency to the solid.

In addition, the composition according to the present invention may optionally contain other additives as are known in the concerned art. For example, curing catalysts, crosslinkers, lubricants, heat stabilizers, flame retardants, and so forth, may be added. The curing catalyst can be a silanol condensation catalyst such as the zinc, tin, or zirconium salt of an organic acid, for example, zinc stearate, zinc oleate, dibutyltin dioleate, dibutyltin dilaurate, and zirconium stearate. The crosslinker is exemplified by silanes which contain 2 or 3 hydrolyzable functional groups, e. g., aminosilanes, aminoxysilanes, oximesilanes, amidosilanes, alkoxysilanes, amino group-containing alkoxysilanes, and epoxy group-containing alkoxysilanes. The crosslinker may also be a partial hydrolyzate of the preceding silanes.

Suitable solids for treatment with the composition according to the present invention encompass various types of fibers and their knits and weaves; paper; natural and synthetic leathers; sheet materials, such as cellophane and plastic films; foams, such as synthetic resin foams; synthetic resin moldings; natural and synthetic rubber moldings; metal moldings; glass moldings; powders, such as inorganic powders and synthetic resin powders; and building materials, such as concrete, mortar, slate, tile, and brick. Among these, particularly suitable materials include diaper covers for infants and adults, rainwear made of natural fiber or synthetic fiber (for example, raincoats, rain gear for mountain climbing, snow apparel, etc.), sheeting for outdoor applications, tenting, wood bathtubs, bathroom tile and wall material which are susceptible to mold growth due to the adherence and/or permeation of rain or moisture, exterior wall materials for buildings, inter alia.

The invention is explained in greater detail below through illustrative examples, in which parts = weight parts, % = weight%, and the viscosity is the value at 25 °C.

## EXAMPLE 1

Methylpolysiloxane resin comprising component (A) was synthesized by changing 125 Parts of 35% concentrated hydrochloric acid and 432 parts of water to a stirrer-equipped three-neck flask. 261 Parts of sodium silicate was gradually dripped in from an addition funnel while stirring, and 225 parts of isopropyl alcohol was then added. After approximately 10 minutes, 111 parts of trimethylchlorosilane was added followed by heating at 80 °C for 1 hour and then cooling. 200 Parts of xylene was added to the system and the aqueous layer was separated off using a separatory funnel. Another 60 parts of isopropyl alcohol was added and part of the solvent was removed at 135 °C to afford a silanol-containing methylpolysiloxane resin (50% solids) composed of $SiO_{4/2}$ units and $(CH_3)_3SiO_{1/2}$ units.

Five Parts of trimethylsiloxy-terminated dimethylpolysiloxane having a viscosity of 350 centistokes (component (B)) was added and homogeneously dissolved into 10 parts of the above methylpolysiloxane resin solution. This was followed by the addition, with stirring, of 5 parts tetrapropyl titanate (component (C)-), 2 parts component (D) as follows

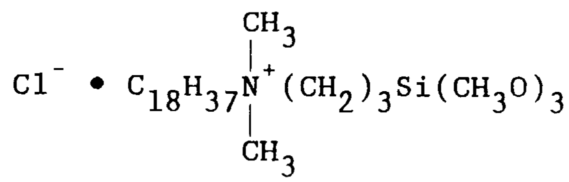

and 1,678 parts of toluene (component (E)) to afford a homogeneous solution containing 1% solids. This was designated as invention product 1.

The following three solutions (1% solids) were prepared for the purposes of comparison. The various components used for this purpose were the same as in invention product 1.

(Comparison Example 1): Solution prepared by the addition of 985 parts toluene to 10 parts component (A) and 5 parts component (B).

(Comparison Example 2): Solution prepared by the addition of 1,183 parts toluene to 10 parts component (A), 5 parts component (B), and 2 parts component (D).

(Comparison Example 3): Solution prepared by the addition of 998 parts toluene to 2 parts component (D).

Each of the 4 treatment baths described above was evaluated as follows. A 30 x 30 cm specimen of 100% cotton raincoat fabric was immersed in the bath for 5 seconds, then wrung out on a wringer roller to an expression ratio of 100% (solids add-on = 1%), and subsequently held for 24 hours at room temperature. The water repellency was measured based on the spray method in "Methods for Testing the Water Repellency of Textile Products" (JIS L-1092). Then, after lightly shaking off the water (adhering water droplets were present in all cases, but the excess water was removed with filter paper in the case of the untreated fabric), the sample was folded down to one-quarter and then placed as such in a polyethylene bag and the bag was sealed. The samples were compared for mold growth and musty odor after standing in a test room at 25°C for 6 months.

As reported in Table 1, the raincoat fabric treated with the treatment agent of invention product 1 had a water repellency of 100. Furthermore, mold growth and a musty odor were completely absent even after standing for 6 months while damp. This treatment agent was a much better water repellent for raincoat applications than any of the comparison examples.

Table 1

| | water repellency | | evaluation after standing sealed for 6 months | evaluation as a treatment agent |
|---|---|---|---|---|
| invention product | 1 | 100 | mold growth and musty odor completely absent | excellent |
| | 1 | 70 | slight musty odor, small black colonies are present | unsuitable |
| comparison examples | 2 | 70 | both mold growth and musty odor completely absent | unsuitable |
| | 3 | 50-70 | musty odor entirely absent | unsuitable |
| | no treatment | | scattered Penicillium, black mold, and colonies are present, fairly strong musty odor | unsuitable |

EXAMPLE 2

The following were dissolved/dispersed to homogeneity: 55 parts of the methylpolysiloxane resin solution comprising the component (A) used in Example 1, 13 parts of hydroxyl-terminated dimethylpolysiloxane having a with viscosity of 100 centistokes as component (B), 5 parts of tetrabutyl zirconate and 2.5 parts of tetrabutyl titanate as component (C), 7 parts of the following as component (D)

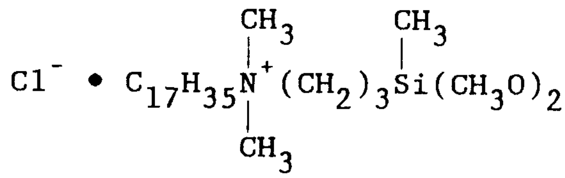

16 parts of toluene, and 1.5 parts of dibutyltin dilaurate catalyst. Ten Parts of this treatment bath was diluted with 90 parts of 1,1,1-trichloroethane to give a treatment bath designated as invention product 2.

Two water absorptive, tanned (tannic acid) cowhide leather insoles for men's leather shoes were each immersed for 1 minute in the invention product 2 treatment bath, then withdrawn and suspended at room temperature for 1 hour, and subsequently heated for 10 minutes in an oven at 130 °C. After spontaneously cooling, one of the treated insoles and an untreated insole were spread out flat on a table and a water droplet was dripped onto each insole using a polyethylene syringe. The water repellency was evaluated as the time in seconds required for the water droplet to spread out and be absorbed. Otherwise, the other insole which had been treated with invention product 2 treatment bath was inserted into the right shoe of a pair of new canvas shoes while an untreated insole was inserted into the left shoe. These shoes were continually worn for 4 months within a temperature-controlled test room (generally held at 25__C) for approximately 10 hours a day for an average of 20 days a month (fresh socks were used each day), and the two insoles were then organoleptically compared for odor.

As demonstrated in Table 2, the leather treated with the invention product 2 treatment agent had an excellent water repellency. Furthermore, in contrast to the untreated insole, it was almost free of odor after the four-month wear test. Thus, the treatment agent of invention product 2 was rated as a superior leather treatment agent.

Table 2

| | time (seconds) required for absorption of the water droplet | odor after wear for 4 months |
|---|---|---|
| insole treated with invention product 2 | $\geq$ 3,600 | almost odor-free |
| untreated insole | 42 | fairly strong odor |

## EXAMPLE 3

The application substrate was the ceiling of an 11-year-old household bathroom on which mold had repeatedly grown. The ceiling was first thoroughly cleaned and dried. The treatment solution used in Example 2 was applied with a paint brush over one-half of the ceiling's surface area, while the other half was left untouched. The bathtub was used each day, and, after eight months had elapsed from the date of application, both the treated and untreated regions were evaluated for water repellency and mold growth.

As reported in Table 3, far fewer water droplets adhered in the region treated with the treatment solution of invention product 2 than in the untreated region and the former water droplets were very much smaller. Furthermore, the ceiling dried rapidly, and black mold growth was entirely absent.

Table 3

| | nature of water droplet adhesion | mold growth status |
|---|---|---|
| region treated with invention product 2 | even when taking a bath, only a small number of small droplets adhere; the water drips off in small droplets; the ceiling also dries quickly | despite contamination of the entire bathroom by mold, mold growth was completely absent |
| untreated growth | a very large number of large droplets adhere; the water drips off in large droplets; the ceiling dries slowly | after 8 months, a thin growth of black mildew has appearrd over the entire area |

## Claims

**1.** A composition for treating solid materials comprising:

(A) 100 parts by weight of an organopolysiloxane resin comprising $SiO_{4/2}$ units and $R_3SiO_{1/2}$ units, wherein R is a monovalent hydrocarbon group, which resin contains reactive groups selected from the group consisting of silanol, silicon-bonded alkoxy groups and a combination thereof;

(B) 1 to 200 parts by weight of a straight-chain diorganopolysiloxane;

(C) 1 to 200 parts by weight of a compound selected from the group consisting of an organotitanate ester, an organozirconate ester and an organogermanate ester;

(D) a compound selected from the group consisting of a silane and its partial hydrolysis condensate, said silane having the general formula

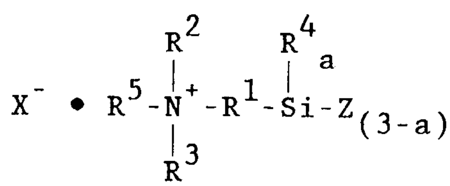

wherein X is a halogen atom, $R^1$ is an alkylene group having 2 to 10 carbon atoms, $R^2$, $R^3$, and $R^4$ are monovalent hydrocarbon groups, $R^5$ is a monovalent hydrocarbon group having 10 to 20 carbon atoms, Z is an alkoxy group and a is 0 or 1, from 0.5 to 100 parts by weight of said component (D) being used for each 100 parts by weight of the total quantity of said components (A) plus (B) plus (C); and (E) a solvent.